(19)

Europäisches
Patentamt
European
Patent Office
Office européen
des brevets

(11) **EP 4 498 121 A1**

(12) **EUROPEAN PATENT APPLICATION**

(43) Date of publication:
**29.01.2025 Bulletin 2025/05**

(21) Application number: **24191311.0**

(22) Date of filing: **26.07.2024**

(51) International Patent Classification (IPC):
**G01S 7/497** (2006.01)　　**G01S 17/931** (2020.01)
**G01S 17/42** (2006.01)

(52) Cooperative Patent Classification (CPC):
**G01S 17/931; G01S 7/497;** G01S 17/42

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.07.2023 US 202363515947 P**

(71) Applicant: **Tusimple, Inc.
San Diego, CA 92122 (US)**

(72) Inventors:
• **ZHANG, Chiyu
  Tucson (US)**
• **HAN, Ji
  Lake Stevens (US)**
• **ZOU, Yao
  Tucson (US)**
• **DONG, Kexin
  Tucson (US)**
• **LI, Yujia
  Tucson (US)**
• **DING, Junchun
  Tucson (US)**
• **HAN, Xiaoling
  San Diego (US)**

(74) Representative: **Pfundner, Benjamin Patrick et al
Kilburn & Strode LLP
Lacon London
84 Theobalds Road
London WC1X 8NL (GB)**

(54) **LIDAR NOISE ANOMALY DETECTION METHOD**

(57)　Devices, systems, and methods for remote detection and ranging are described. In an embodiment, a remote sensing method includes obtaining data points that are spatially distributed and have respective intensity values, by performing a remote detection and ranging operation, determining a spatial autocorrelation of a set of data points, out of the data points, based on a difference in distances between data points in the data points, determining an intensity weight multiplier based on a reference intensity value of the data points and an average intensity value of the data points, and determining a quality score of the set of data points by applying the intensity weight multiplier to the spatial autocorrelation of the set of data points; and identifying, based on the quality score, whether the set of data points includes one or more data points that are created by a noise source.

FIG. 23

**Description**

TECHNICAL FIELD

This document generally relates to remote sensing and perception systems and methods for autonomous driving.

BACKGROUND

Light detection and ranging (LiDAR) is a remote sensing and perception system that can determine ranges by targeting an object or a surface with a laser and measuring the time for the reflected light to return to the receiver. One of the significant issues with LiDAR is the difficulty in reconstructing point cloud data in poor weather conditions. In heavy rain, for example, the light pulses emitted from LiDAR system are partially reflected off of rain droplets which adds noise to the data.

SUMMARY

Disclosed are devices, systems, and methods for processing LiDAR data.
In an aspect, a remote sensing method may include obtaining data points that are spatially distributed and have respective intensity values by performing a remote detection and ranging operation, determining a spatial autocorrelation of a set of data points, out of the data points, based on a difference in distances between data points in the set of data points, determining an intensity weight multiplier based on a reference intensity value of the data points and an average intensity value of the data points, determining a quality score of the set of data points by applying the intensity weight multiplier to the spatial autocorrelation of the set of data points, and identifying, based on the quality score, whether the set of data points includes one or more data points that are created by a noise source.
In another aspect, a remote sensing method may include generating a remote sensing image grid that includes a plurality of grid cells obtained by performing a remote detection and ranging operation, by dividing a spatial distribution of data points into the plurality of grid cells, determining an intensity weight multiplier based on a reference intensity value of the plurality of data points and an average intensity value of the plurality of data points, determining a spatial autocorrelation of data points for each grid cell based on a difference in distances between data points in each grid cell, determining a quality score of the data points in each grid cell by applying the intensity weight multiplier to the spatial autocorrelation of the data points in each grid cell, and identifying, based on the quality score, whether the data points in each grid cell include one or more data points that are created by a noise source.
In another aspect, a remote sensing and perception system may include a first data processing unit configured to: generate a remote sensing image grid that includes a plurality of grid cells obtained by performing a remote detection and ranging operation, by dividing a spatial distribution of data points into the plurality of grid cells; determine an intensity weight multiplier based on a reference intensity value of the plurality of data points and an average intensity value of the plurality of data points; and determine a quality score of the data points in each grid cell; and a second processing unit in communication with the first data processing unit and including a plurality of arithmetic-logic units configured to perform computations in parallel, each of the plurality of arithmetic-logic units configured to determine a spatial autocorrelation of data points in each corresponding grid cell based on a difference in distances between data points in each grid cell, wherein the quality score of the data points in each grid cell is determined by: applying the intensity weight multiplier to the spatial autocorrelation of the data points in each grid cell; and identifying, based on the quality score, whether the data points in each grid cell include one or more data points that are created by a noise source.
The above and other aspects and features of the disclosed technology are described in greater detail in the drawings, the description, and the claims.

BRIEF DESCRIPTION OF THE DRAWINGS

FIG. 1 shows a block diagram of an example vehicle ecosystem including an in-vehicle control computer.

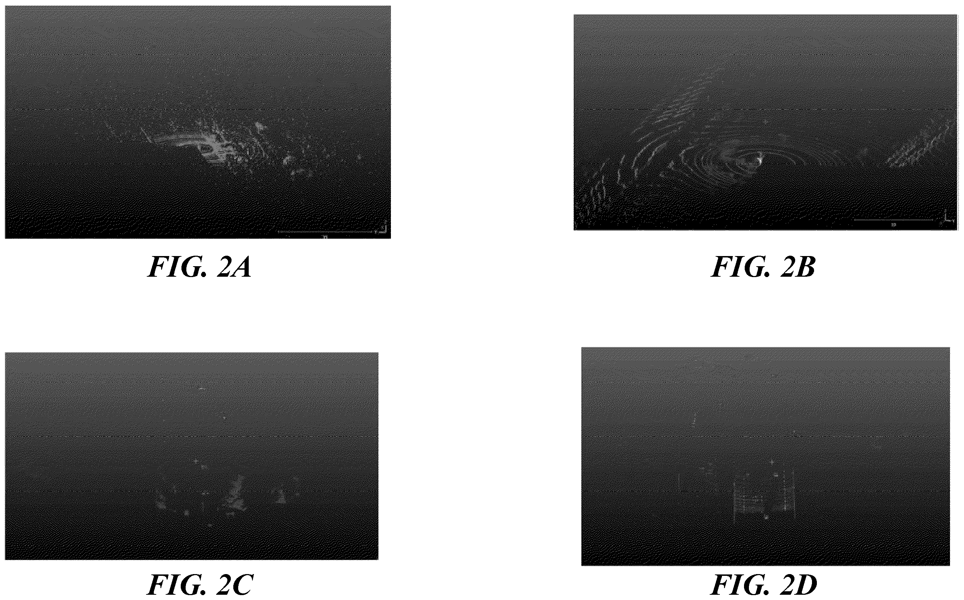

FIG. 2A shows an example of LiDAR pointcloud generated by an example LiDAR remote sensing and perception system and impacted by a hardware failure. FIG. 2B shows another example of LiDAR pointcloud generated by the example LiDAR remote sensing and perception system and impacted by rain. FIG. 2C shows an example of LiDAR pointcloud generated by another example LiDAR remote sensing and perception system and impacted by rain. FIG. 2D shows another example of LiDAR pointcloud generated by the other example LiDAR remote sensing and perception system and impacted by electromagnetic interference (EMI).
FIG. 3 shows an example of LiDAR pointcloud spatial distribution.

FIG. 4 shows an example of LiDAR pointcloud that is less dispersed (case 1) and another example of LiDAR pointcloud that is more dispersed (case 2).

FIG. 5 shows an example of clustered false positive detection in heavy rain.

FIG. 6 shows an example of average intensity of a forward-looking LiDAR on a vehicle as the vehicle passes a road sign.

FIG. 7 shows an example of LiDAR image grid based on some embodiments of the disclosed technology.

FIG. 8 shows a snapshot of an affected pointcloud.

FIG. 9 shows an example of LiDAR quality metric score over 1 min trip based on some embodiments of the disclosed technology.

FIG. 10 shows an averaged variance of all grid cells over an extension of 1 min trip based on some embodiments of the disclosed technology.

FIGS. 11A shows a LiDAR data frame during a heavy rain. FIGS. 11B shows a forward-looking camera image at the corresponding time.

FIG. 12 shows an example of LiDAR quality metric score over 1 hour trip based on some embodiments of the disclosed technology.

FIG. 13A shows an example frame of LiDAR pointcloud projected to a grid image based on some embodiments of the disclosed technology. FIG. 13B shows the same projected LiDAR frame with grid cells colored by grayscale indicating the proposed metric with the intensity weight multiplier.

FIG. 14 shows an example of a 3min trip segment based on some embodiments of the disclosed technology.

FIG. 15A shows both weighted spatial autocorrelation and unweighted spatial autocorrelation over the 3 min trip segment shown in FIG. 14. FIG. 15B shows the average intensity of the LiDAR pointcloud throughout the trip.

FIG. 16 shows LiDAR over the same 1hr rain trip segment as shown in FIG. 12.

FIG. 17 shows both weighted spatial autocorrelation and unweighted spatial autocorrelation over the 1 hour trip segment shown in FIG. 16.

FIGS. 18A-18B show pointcloud generated by two example LiDAR models in fog.

FIG. 18C shows a camera image reference correlating to the conditions under which the pointclouds shown in FIGS. 18A and 18B were generated.

FIGS. 19A-19B show weighted spatial autocorrelation and unweighted spatial autocorrelation of two example LiDAR models over a 1 hour trip segment.

FIG. 20 shows an example LiDAR remote sensing and perception system that performs computations in parallel using a plurality of arithmetic-logic units to accelerate the spatial autocorrelation calculation based on some embodiments of the disclosed technology.

FIG. 21 shows an example of a remote sensing and perception system based on some embodiments of the disclosed technology.

FIG. 22 shows an example of a remote sensing and perception system for controlling an autonomous vehicle based on some embodiments of the disclosed technology.

FIG. 23 shows a flowchart of an example of a remote sensing and perception method based on some embodiments of the disclosed technology.

FIG. 24 shows a flowchart of an example of a remote sensing and perception method based on some embodiments of the disclosed technology.

DETAILED DESCRIPTION

Section headings are used in the present document only for ease of understanding and do not limit scope of the embodiments to the section in which they are described.

To automatically detect whether the LiDAR pointcloud quality is negatively affected by rain, fog, or other noise sources (such as EMI), a pointcloud quality metric based on the LiDAR ranging and intensity characteristics has been developed. The proposed metric relies only on the current LiDAR data frame's geometric features and do not require any perception or training modules, and thus it can be easily deployed to various LiDAR systems. The proposed metric is tested with real road data and is proved to be capable of distinguishing the 'low quality' data frames with noise anomaly from the normal ones for both 905nm and 1550nm LiDARs.

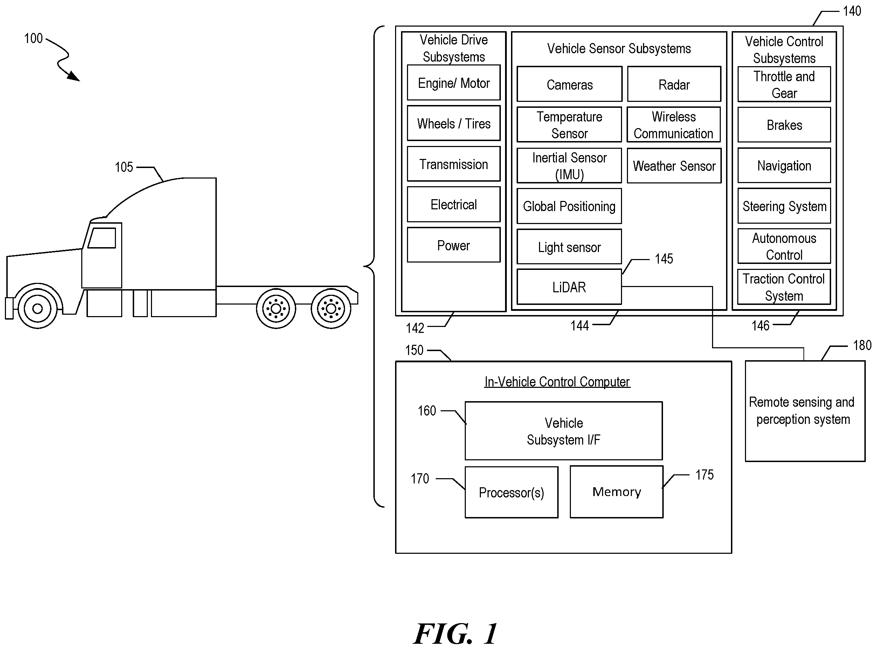

FIG. 1 shows a block diagram of an example vehicle ecosystem 100 in which an in-vehicle control computer 150 located in an autonomous vehicle 105. As shown in FIG. 1, the autonomous vehicle 105 may be a semi-trailer truck. The vehicle ecosystem 100 may include several systems and components that can generate and/or deliver one or more sources of information/data and related services to the in-vehicle control computer 150 that may be located in an autonomous vehicle 105. The in-vehicle control computer 150 can be in data communication with a plurality of vehicle subsystems 140, all of which can be resident in the autonomous vehicle 105. The in-vehicle control computer 150 and the plurality of vehicle subsystems 140 can be referred to as autonomous driving system (ADS). A vehicle subsystem interface 160 is provided to facilitate data communication between the in-vehicle control computer 150 and the plurality of vehicle subsystems 140. In some embodiments, the vehicle subsystem interface 160 can include a controller area network controller to communicate with devices in the vehicle subsystems 140.

In some implementations, the in-vehicle control computer 150 may include at least one processor 170 (which can include at least one microprocessor) that executes processing instructions stored in a non-transitory computer readable medium, such as a memory 175. The in-vehicle control computer 150 may also represent a plurality of computing devices that may serve to control individual components or subsystems of the autonomous vehicle 105 in a distributed fashion. In some embodiments, the memory 175 may contain processing instructions (e.g., program logic) executable by the processor 170 to perform various methods and/or functions of the autonomous vehicle 105 as explained in this patent document. For instance, the processor 170 executes the operations associated with the plurality of vehicle subsystems 140 for ensuring safe operation of the autonomous vehicle by training using simulations of different scenarios.

In some implementations, the memory 175 may contain additional instructions as well, including instructions to transmit data to, receive data from, interact with, or control one or more of a vehicle drive subsystem 142, a vehicle sensor subsystem 144, and a vehicle control subsystem 146.

The autonomous vehicle 105 may include various vehicle subsystems that facilitate the operation of vehicle 105. The vehicle subsystems may include the vehicle drive subsystem 142, the vehicle sensor subsystem 144, and/or the vehicle control subsystem 146. The components or devices of the vehicle drive subsystem 142, the vehicle sensor subsystem 144, and the vehicle control subsystem 146 are shown as examples in FIG. 1. In some embodiment, additional components or devices can be added to the various subsystems or one or more components or devices can be removed. The vehicle drive subsystem 142 may include components operable to provide powered motion for the autonomous vehicle 105. In an example embodiment, the vehicle drive subsystem 142 may include an engine or motor, wheels/tires, a transmission, an electrical subsystem, and a power source.

The vehicle sensor subsystem 144 may include a number of sensors configured to sense information about an environment in which the autonomous vehicle 105 is operating or a condition of the autonomous vehicle 105. The vehicle sensor subsystem 144 may include one or more cameras or image capture devices, one or more temperature sensors, an inertial measurement unit (IMU), a localization system such as a Global Positioning System (GPS), a laser range finder/LiDAR unit, a RADAR unit, an ultrasonic sensor, and/or a wireless communication unit (e.g., a cellular communication transceiver). The vehicle sensor subsystem 144 may also include sensors configured to monitor internal systems of the autonomous vehicle 105 (e.g., an O2 monitor, a fuel gauge, an engine oil temperature, etc.,). In some implementations, the autonomous vehicle 105 may further include a synchronization unit that synchronizes multiple heterogeneous sensors.

The IMU may include any combination of sensors (e.g., accelerometers and gyroscopes) configured to sense position and orientation changes of the autonomous vehicle 105 based on inertial acceleration. The localization system may be any sensor configured to estimate a geographic location of the autonomous vehicle 105. For this purpose, the localization system may include a receiver/transmitter operable to provide information regarding the position of the autonomous vehicle 105 with respect to the Earth. The RADAR unit may represent a system that utilizes radio signals to sense objects within the environment in which the autonomous vehicle 105 is operating. In some embodiments, in addition to sensing the objects, the RADAR unit may additionally be configured to sense the speed and the heading of the objects proximate to the autonomous vehicle 105. The laser range finder or LiDAR unit may be any sensor configured to sense objects in the environment in which the autonomous vehicle 105 is located using lasers. The LiDAR unit may be a spinning LiDAR unit or a solid-state LiDAR unit. The cameras may include one or more cameras configured to capture a plurality of images of the environment of the autonomous vehicle 105. The cameras may be still image cameras or motion video cameras.

The vehicle control subsystem 146 may be configured to control operation of the autonomous vehicle 105 and its components. Accordingly, the vehicle control subsystem 146 may include various elements such as a throttle and gear, a brake unit, a navigation unit, a steering system and/or an autonomous control unit. The throttle may be configured to control, for instance, the operating speed of the engine and, in turn, control the speed of the autonomous vehicle 105. The gear may be configured to control the gear selection of the transmission. The brake unit can include any combination of mechanisms configured to decelerate the autonomous vehicle 105. The brake unit can use friction to slow the wheels in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the localization system and one or more predetermined maps so as to determine the driving path for the autonomous vehicle 105. The steering system may represent any combination of mechanisms that may be operable to adjust the heading of vehicle 105 in an autonomous mode or in a driver-controlled mode.

The traction control system (TCS) may represent a control system configured to prevent the autonomous vehicle 105 from swerving or losing control while on the road. For example, TCS may obtain signals from the IMU and the engine torque value to determine whether it should intervene and send instruction to one or more brakes on the autonomous vehicle 105 to mitigate the autonomous vehicle 105 swerving. TCS is an active vehicle safety feature designed to help vehicles make effective use of traction available on the road, for example, when accelerating on low-friction road surfaces. When a vehicle without TCS attempts to accelerate on a slippery surface like ice, snow, or loose gravel, the wheels can slip and can cause a dangerous driving situation. TCS may also be referred to as electronic stability control (ESC) system.

In some embodiments of the disclosed technology, a remote sensing and perception system may include a LiDAR 145 and a remote sensing and perception system 180.

Certain weather conditions, such as rain or fog, and other factors, such as electromagnetic interference (EMI) or hardware failure, can cause the LiDAR to generate pointclouds with a large amount of false positive points. Such a degradation or failure in the LiDAR perception performance may lead to a critical system failure or a perception system may be deemed to be outside the operational design domain (ODD). In addition, to achieve higher level of autonomy (e.g., L3+), it is required that the ADS determines if the system and components (e.g., LiDARs) are operating within the ODD and/or in a healthy state. Therefore, in some implementations, the system keeps monitoring the LiDAR performance and determine whether an incoming LiDAR pointcloud is in a usable state.

In some implementations, a remote sensing and perception system mainly focuses on the performance degradation of the LiDAR in certain weather conditions such as rain or fog. Some quantification methods can reduce LiDAR performance degradation based on, e.g., signal attenuation, visibility range, point density, and target reflectance in rain or fog, and such quantification methods may be verified by simulations or controlled environment tests. In some implementations, statistical learning approaches and anomaly detection methods can be used to quantify the performance degradation in adverse weather conditions such as rain or fog. However, in some cases, a LiDAR performance degradation, and a critical perception system failure, which can occur simultaneously, are not related to each other. In one example, even when a LiDAR has a reduced visibility range in rain, the perception system may remain functional. In another example, even if the LiDAR is operating with its full performance in a sunny day, the LiDAR may generate a large amount of false positive points due to a hardware failure and may cause a perception system failure. In some implementations, a deep-learning-based approach may be used to classify and detect LiDAR pointcloud anomalies. However, the deep-learning-based approach requires a large amount of annotated LiDAR data frames to train the software, and the data collection, annotation and training pipeline must be repeated for different LiDAR properties, such as spinning vs solid state, 905nm vs 1550nm, and a change to the mounting locations. In addition, the real-time computational cost is high and may not be desirable given the limited onboard computational cost.

The disclosed technology can address the issues discussed above by using a new performance metric to detect an anomaly in LiDAR pointcloud that is caused by rain, fog, or other noise sources such as EMI or hardware failure. The performance metric is focused on the characteristics of the LiDAR pointcloud impacted by the above noise sources, data points of which are sparsely and randomly distributed in space and have abnormal intensities (e.g., reflectance). Instead of, or in addition to, the above-discussed metrics such as visibility and point density degradation, the disclosed technology can be implemented in some embodiments to consider (1) abnormal range and intensity distribution of the LiDAR pointcloud, and/or (2) high false positive rate, which may lead to a critical perception system failure. The metric based on some embodiments of the disclosed technology only requires basic LiDAR performance statistics, and it does not need priori rain data or training. The metric based on some embodiments of the disclosed technology can be tested with real road data collected from various LiDAR types and wavelengths with a combination of one or more of clear weather, rain, fog, EMI, or hardware component failure. The metric based on some embodiments of the disclosed technology can distinguish low-quality data frames from normal data frames for both 905nm and 1550nm LiDARs.

<u>LiDAR Pointcloud Characteristics</u>

LiDAR pointcloud impacted by weather conditions or hardware component failures typically have the following two characteristics:

(a) Randomly and sparsely distributed detections in the 3D space (e.g., detected point clusters of points that are randomly and sparsely distributed). EMI and hardware failure may affect the LiDAR's signal processing module and generate random and sparse false positives. In weather conditions such as rain or fog, this is mainly caused by reflection from water droplets, reflection from scattered laser signals and reduced pointcloud density due to signal attenuation.
(b) Abnormal intensity values. In weather conditions such as rain or fog, the intensity values are typically lower than normal due to signal attenuation. EMI and hardware failure may lead to either low or excessively high intensity values. In some implementations, the term "intensity" that is used in relation to a remote detection and ranging operation such as LiDAR can indicate a reflectivity (e.g., the ability of a surface to reflect the laser pulse that LiDAR sends out) or a strength of a receiving signal of LiDAR. In some implementations, the intensity refers to the strength of signals or light rays received by a ranging sensor during its ranging operation, e.g., the number of transmitted signals or light rays (e.g., laser pulses) that are reflected by a target object. The intensity is dependent on a reflectivity of a surface of the target object, a range or distance between the sensor and the target object, and environment conditions.

FIG. 2A shows an example of LiDAR pointcloud generated by an example LiDAR remote sensing and perception system and impacted by a hardware failure. FIG. 2B shows another example of LiDAR pointcloud generated by the example LiDAR remote sensing and perception system and impacted by rain. FIG. 2C shows an example of LiDAR pointcloud generated by another example LiDAR remote sensing and perception system and impacted by rain. FIG. 2D shows another example of LiDAR pointcloud generated by the other example LiDAR remote sensing and perception system and impacted by electromagnetic interference

(EMI). All figures are colored by the LiDAR intensity values. The points in red indicate the highest intensities, the points in blue indicate the lowest intensities, and the points in green indicate intensities lower than the points in red and higher than the points in blue (e.g., intermediate intensity values).

Performance Metric Formulation

In some embodiments of the disclosed technology, a remote sensing method includes a performance metric formulation that includes obtaining a random and sparse distribution of the LiDAR detections, and a determination of abnormal intensity values.

Spatial Measure

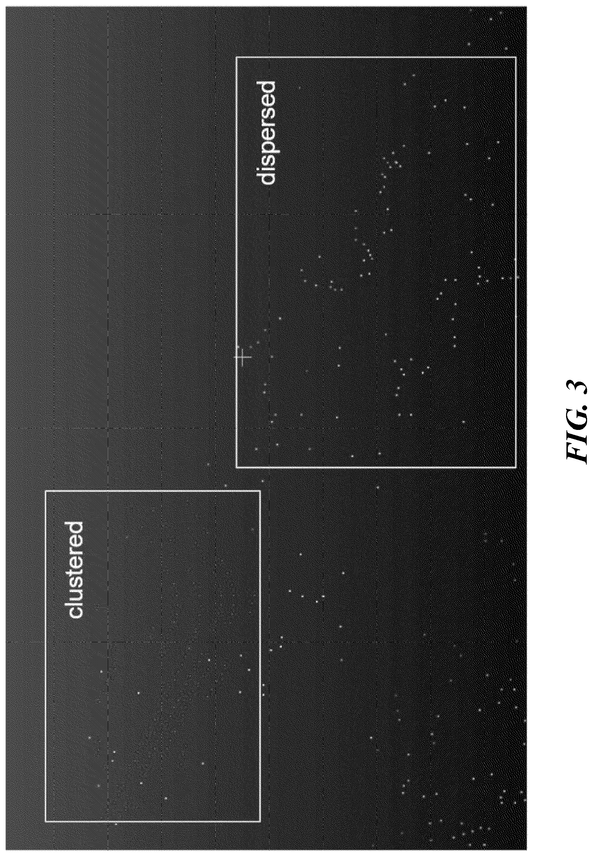

FIG. 3 shows an example of LiDAR pointcloud spatial distribution.

In some embodiments of the disclosed technology, the remote sensing method includes a spatial autocorrelation as a measure of a spatial distribution of the LiDAR detections. The underlying idea is that if a segment of LiDAR pointcloud data is generated by a laser that detects an actual object, the distance values in the data segment tend to be clustered. On the other hand, if a LiDAR data segment contains an excessive number of noise points, the distance values in the data segment are more likely dispersed. Referring to FIG. 3, the vehicle detection from the LiDAR is clustered and the water splash behind the vehicle is dispersed.

The spatial autocorrelation of a set of LiDAR points is defined as follows. Given a set of LiDAR points:

$$P = \left\{ p_i = \left( r_i, \theta_i, \phi_i, \gamma_i \right) \middle| i = 1, 2, \ldots N \right\} \qquad (\text{Eq. 1})$$

where $r_i$, $\theta_i$, $\phi_i$ and $\gamma_i$ represent the distance, azimuth, elevation, and intensity of the i-th LiDAR point, respectively.

The spatial autocorrelation of the distance values is defined as:

$$I = \begin{cases} \dfrac{N}{W} \dfrac{\sum_{i=1}^{N}\sum_{j=1}^{N} w_{ij}\left(r_i - r\right)\left(r_j - r\right)}{\sum_{i=1}^{N}\left(r_i - r\right)^2} & N > 1 \\ -1 & N = 1 \end{cases} \qquad (\text{Eq. 2})$$

$$r = \frac{1}{N}\sum_{i=1}^{N} r_i$$

where                  is the average distance of all distance values in the data segment.

In Eq. 2, $w_{ij}$ is a pre-defined weight value. For example, $w_{ij}$ can be set as the inverse angular distance between points $p_i$ and $p_j$ for $i \neq j$ and 0 for $i = $ J .

$$w_{ij} = \begin{cases} \left\| \left(\theta_i, \phi_i\right), \left(\theta_j, \phi_j\right) \right\|^{-2} & i \neq j \\ 0 & i = j \end{cases} \qquad (\text{Eq. 3})$$

In another example, w $_{ij}$ can be set as 1 for $i = j$ and 0 for $i = j$.

$$w_{ij} = \begin{cases} 1 & i \neq j \\ 0 & i = j \end{cases}$$

(Eq. 4)

In some implementations, the sum of all weights can be expressed as:

$$W = \sum_{i=1}^{N} \sum_{j=1}^{N} w_{ij}$$

(Eq. 5)

The spatial autocorrelation is valued between [-1, 1], where a high value means that the data points are clustered, and a low value means that the data points are dispersed. It should be noted that by the definition above, an isolated point is also considered as perfectly dispersed since it is most likely to be treated as a noise point in perception algorithms.

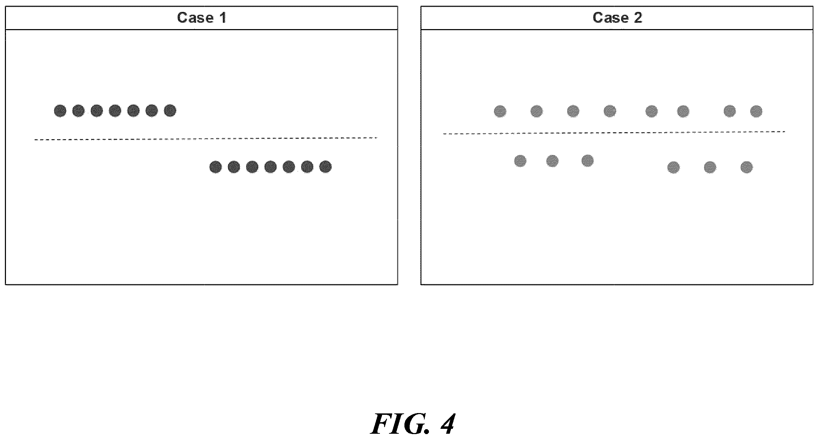

FIG. 4 shows an example of LiDAR pointcloud that is less dispersed (case 1) and another example of LiDAR pointcloud that is more dispersed (case 2).
The main difference between the autocorrelation and statistical variance is that the statistical variance only considers the absolute distance between each individual point to the mean, and the spatial autocorrelation considers the difference between neighboring points. For example, consider two-point distributions shown as below. Both case 1 and case 2 have the same range variance, and yet the spatial autocorrelation of case 2 is negative while the spatial autocorrelation of case 1 is positive, indicating the pointcloud in case 2 is more dispersed. In some implementations, multiple vehicles/objects in the LiDAR field of view can typically generate a pointcloud distribution similar to case 1, and noise/false positives may result in a pointcloud distribution close to case 2. In addition, an isolated point has minimum variance by definition, while it has the lowest spatial autocorrelation score following the formulation above. Therefore, spatial autocorrelation is a more suitable point range distribution measure for our application.

Intensity Measure

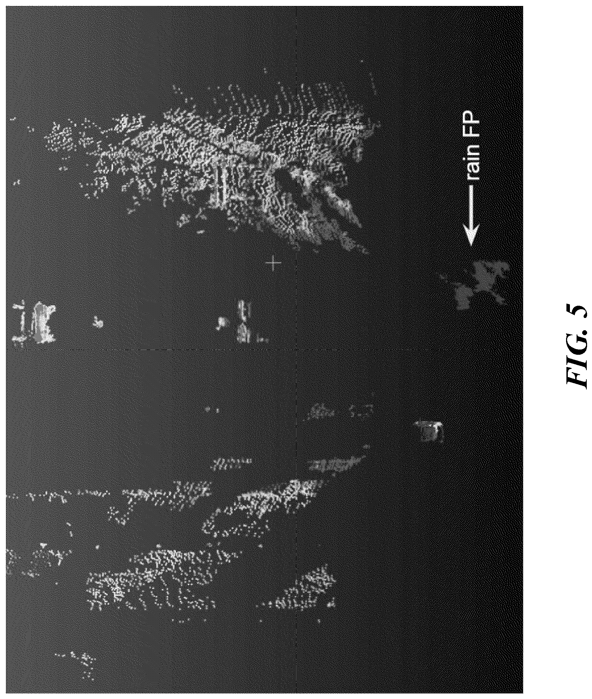

FIG. 5 shows an example of clustered false positive detection in heavy rain.
Some LiDARs may occasionally generate clustered false positive detections in heavy rain or dense fog, which can be hard to capture by spatial autocorrelation. FIG. 5 shows an example of such false positives.
On the other hand, as shown in the pointcloud examples above, the perception system based on some embodiments of the disclosed technology may capture LiDAR data frames having low data quality because they tend to have abnormal intensity distributions. In most cases, the LiDAR data may have intensities that are lower than normal intensities, and in some other cases, the LiDAR data may have extremely high or oversaturated intensities. Therefore, the disclosed technology can be implemented in some embodiments to take the intensity into consideration, in addition to the spatial autocorrelation, by applying or adding an intensity weight multiplier to the spatial autocorrelation (e.g., by multiplying the spatial autocorrelation by the intensity weight multiplier). The intensity weight multiplier can be formulated from any intensity statistical measures such as mean, standard deviation, or even higher order statistical moments. In some embodiments discussed in this patent document, the formulation of the intensity multiplier may be based on the intensity mean.
Let $\gamma_{ref}$ be a reference intensity value associated to particular LiDAR models. The reference value indicates a normal LiDAR intensity during a normal operation (e.g., clear weather, no hardware issues). The reference is user defined and can be obtained through a statistical analysis of LiDAR data, since the LiDAR intensity during normal operation is typically consistent with small fluctuations. Let $\bar{\gamma}$ be the average intensity of the set of LiDAR points $P$. The intensity weight multiplier is formulated as follow:

$$K_{\gamma} = exp\left( k \cdot \frac{max\left(0, \gamma_{ref} - \bar{\gamma}\right)}{\gamma_{ref}} \right)$$

(Eq. 6)

where k is a constant scale factor. The above definition of $K_{\gamma}$ addresses low intensity values since they are most common in rain or fog conditions. A low average intensity leads to a high weight multiplier. High average intensity does not contribute to the weight multiplier, because a high average intensity can also be a result of retro-reflective targets occurring at a close range, which is irrelevant to the LiDAR data quality and is very commonly seen as vehicles can pass road signs from time to time.

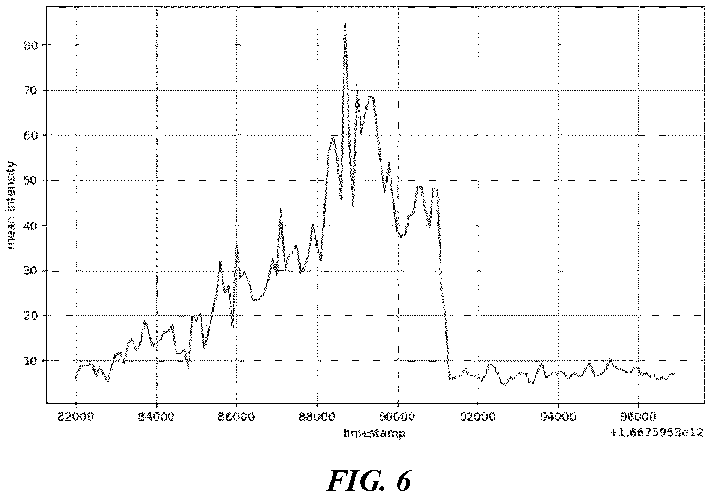

FIG. 6 shows an example of average intensity of a forward-looking LiDAR on a vehicle as the vehicle passes a road sign. The average intensity ramps up as the road sign gets close to the vehicle and becomes larger in the LiDAR field-of-view (FOV).

In some embodiments of the disclosed technology, the LiDAR data quality metric is formulated as the multiplication of the intensity weight multiplier and the spatial autocorrelation $K_\gamma \cdot I$. In one example, the statistics of the LiDAR quality metric may be obtained from test data and correspond to the system performance and product requirement that can be used to determine a threshold value to determine whether LiDAR data is "low-quality."

Image Grid Implementation

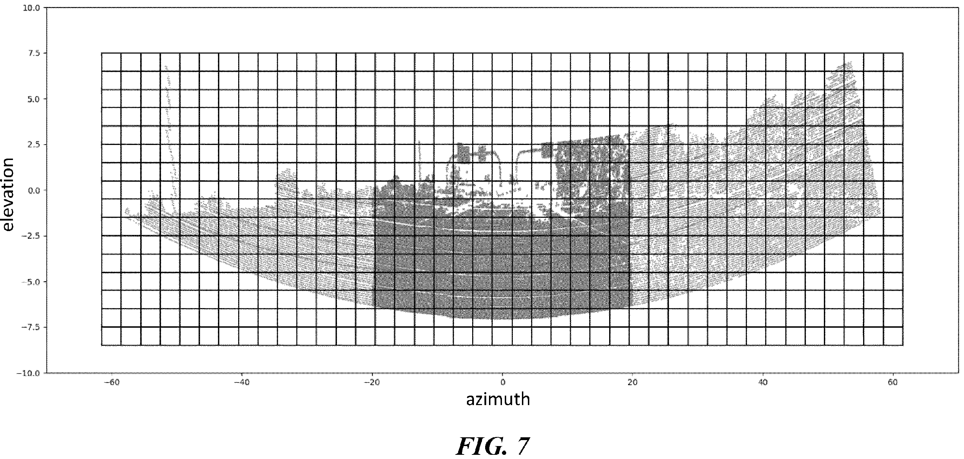

FIG. 7 shows an example of a LiDAR image grid based on some embodiments of the disclosed technology.

In order to obtain the spatial autocorrelation of LiDAR points, the disclosed technology can be implemented in some embodiments to perform a calculation on LiDAR points in a small local area instead of performing a calculation on all LiDAR points across the entire FOV all at once, since typical objects and other physical features do not occupy the entire LiDAR FOV and the LiDAR points are bound to be scattered when looking from a global FOV perspective. Furthermore, such a calculation on LiDAR points in a small local area can reduce the computational cost as the spatial autocorrelation is of $O(N^2)$ with N being the number of points considered in the calculation. Therefore, a LiDAR signal processing method based on some embodiments of the disclosed technology may include creating a LiDAR image grid and calculate the spatial autocorrelation grid by grid. For each LiDAR data frame, the LiDAR signal processing method may include projecting the LiDAR data onto an azimuth-elevation image and dividing the image by grids. In some embodiments, each projected point contains range and intensity information.

In some embodiments, for each grid, the LiDAR signal processing method may include calculating the weighted spatial autocorrelation of all the distance values of the points in that grid. In some embodiments, the autocorrelation formula requires at least two points in the grid. In some embodiments, the unweighted spatial autocorrelation value of the grid can be defined as -1 if there is only one point in the grid, i.e., if the isolated point is considered as a "perfectly scattered" point. The overall performance score of the LiDAR data frame is the sum of the weighted spatial autocorrelation over all grids averaged by the number of grids.

In scenarios below, the test results of the proposed metric with various LiDARs and with data collected from uncontrolled road environment are provided. The LiDAR and metric parameters are listed in the table below.

Table 1

| LiDAR Model | Type | Wavelength | Orientation | Grid Size (HxV) | Reference Intensity Value |
|---|---|---|---|---|---|
| LiDAR 1 | MEMS | 1550nm | Forward-looking | 3°x1° | 25 |
| LiDAR 2 | Spinning | 905nm | Surrounding | 3°x2° | 65 |

Scenario 1: Electromagnetic Interference (EMI)

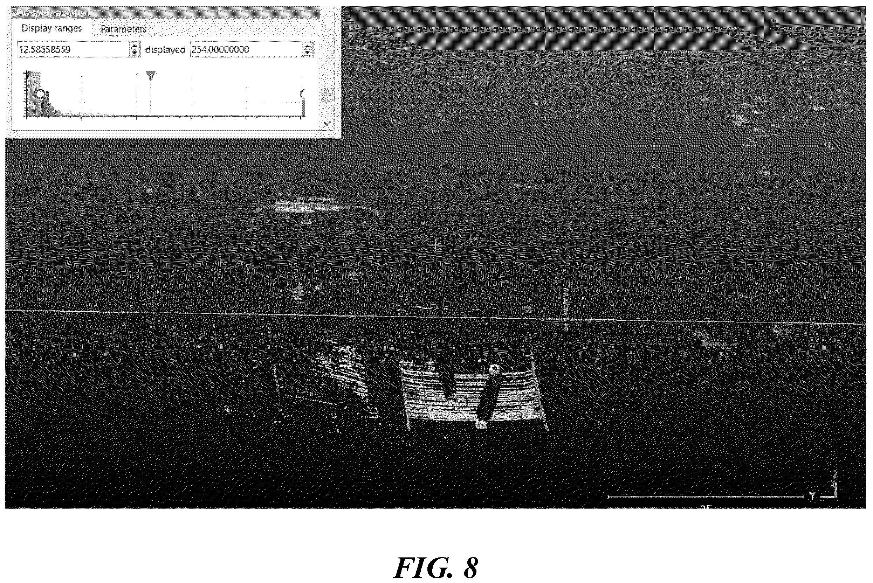

FIG. 8 shows a snapshot of an affected pointcloud.

This scenario is a Imin trip segment where the LiDAR pointcloud generated by LiDAR 1 is impacted by EMI for about 10s, generating a large amount of low-intensity false positives. Referring to FIG. 8, the false-positive detections are randomly and sparsely distributed over the LiDAR FOV and have low intensity values.

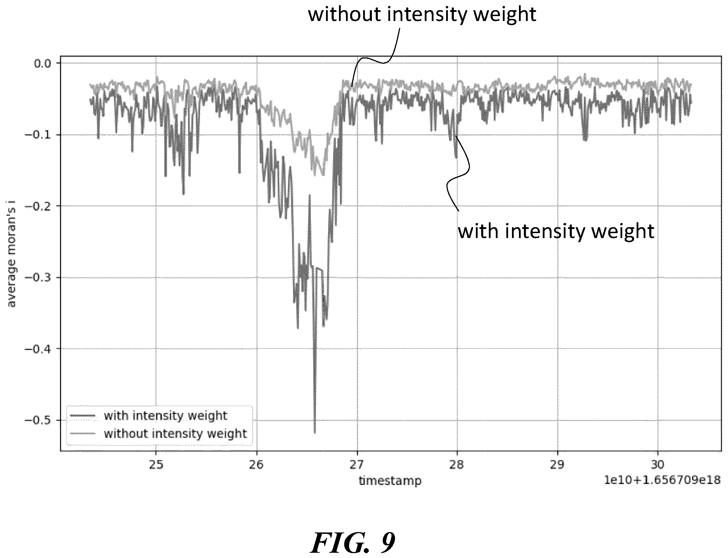

FIG. 9 shows an example of a LiDAR quality metric score over a 1 min trip segment based on some embodiments of the disclosed technology.

To demonstrate how the spatial autocorrelation and the intensity weight multiplier contribute to the overall metric respectively, the orange curve shows the spatial autocorrelation over time without the multiplication of the intensity weight, and the blue curve shows the overall quality metric score. Both curves show significant dips for about 10s which correspond to the duration of the EMI effect. In this scenario, the spatial autocorrelation can clearly capture the false positives, and the intensity weight magnifies the gap between the normal and low-quality data frames since most of the noise points have low intensity values. It should be noted that even for normal data frames, the intensity weight scales the spatial autocorrelation since there are always points with intensity values below the reference intensity.

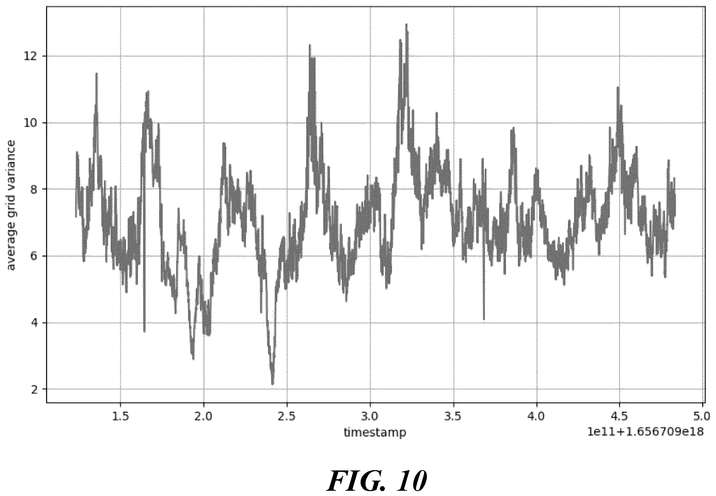

FIG. 10 shows an averaged variance of all grid cells over an extension of a 1 min trip segment based on some embodiments of the disclosed technology.

While the EMI affected pointcloud leads to a peak in the variance, there are other peaks when the pointcloud is normal, making the variance score not able to distinguish the pointcloud frames with anomaly.

Scenario 2: Rain

An 1hr trip segment is analyzed by LiDAR 1 for the rain performance, where the weather is clear for the first half hour followed by heavy to moderate rain in the next 20min and rain stops in the last 10 min., but the road surface is extremely wet.

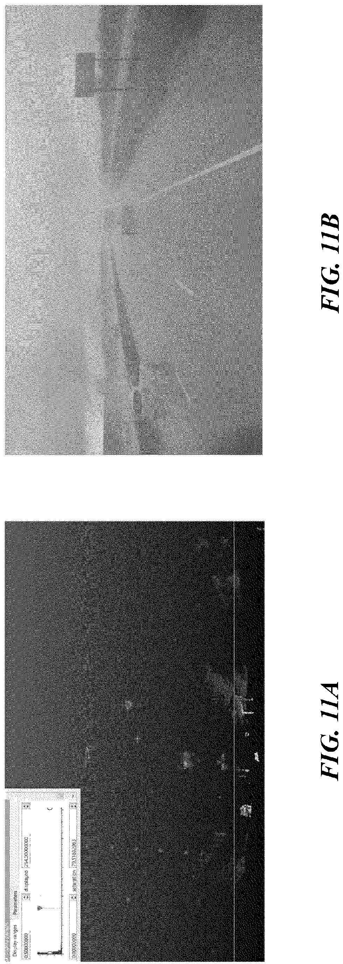

FIGS. 11A shows a LiDAR data frame during a heavy rain. FIGS. 11B shows a forward-looking camera image at the corresponding time.

The pointcloud density and overall intensity drops significantly during rain. In addition, as mentioned above, there are clustered false positive points close to the LiDAR whose intensity values are low.

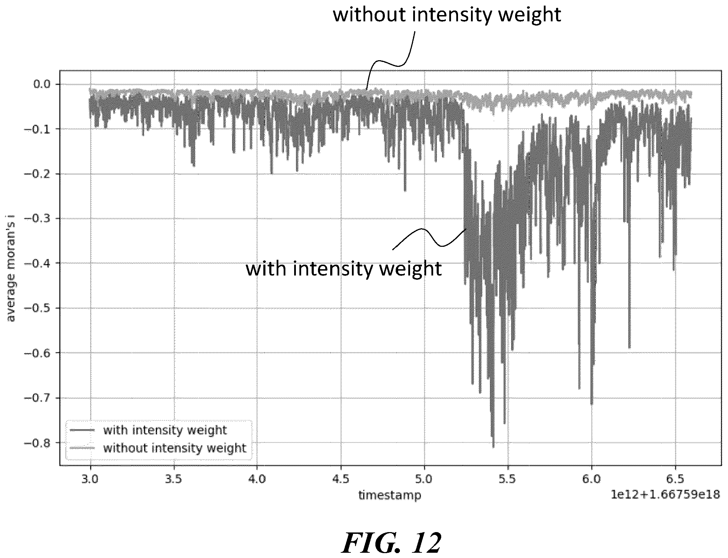

FIG. 12 shows an example of LiDAR quality metric score over a 1 hour trip segment based on some embodiments of the disclosed technology.

Similarly, we show both the spatial autocorrelation over time with and without the multiplication of the intensity weight.

The spatial autocorrelation itself does not distinguish the rain data frames well from the normal data frames. With the help of the intensity weight multiplier, the rain data frames are well distinguished from the normal data frames. A detailed study of how the quality metric performs on the LiDAR's rain data is presented below.

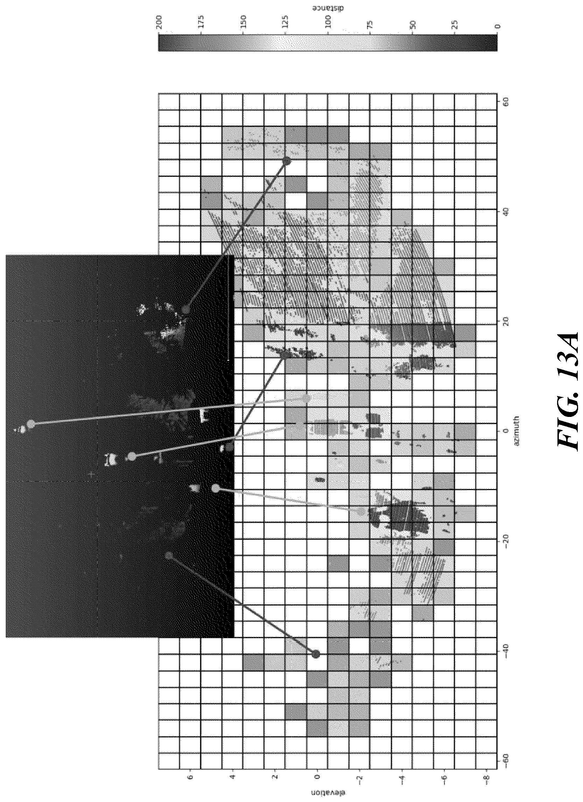

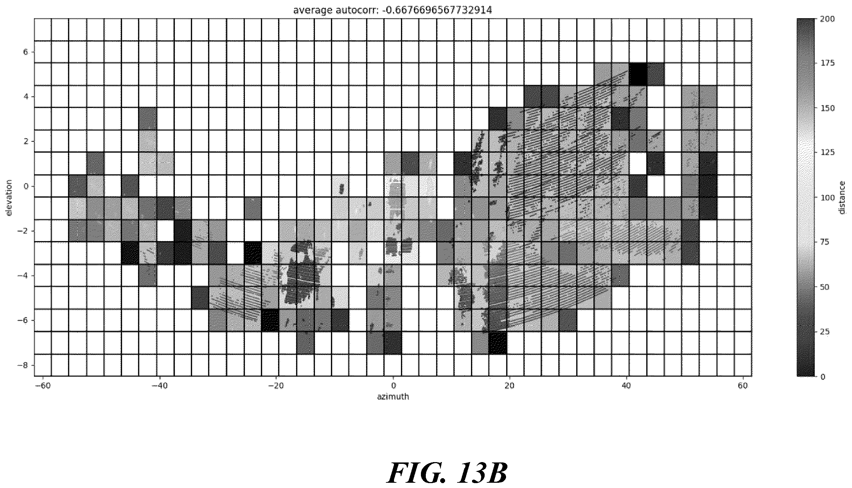

FIG. 13A shows an example frame of LiDAR pointcloud projected to a grid image based on some embodiments of the disclosed technology. FIG. 13B shows the same projected LiDAR frame with grid cells colored by grayscale indicating the proposed metric with the intensity weight multiplier.

Referring to FIG. 13A, the Lidar points are colored by the point range. Different sections of the grid image are associated with the objects shown in the 3D pointcloud view. The grid cells are colored by grayscale indicating the raw spatial autocorrelation values. A low ratio autocorrelation corresponds to a darker color and vice versa. Since the LiDAR 1 uses a 1550nm laser source, there are fewer false positives generated from water splash. In some implementations, the point density drops considerably in rain due to the high water absorb rate. As a result, most of the low spatial autocorrelation scores are generated from sparse roadside detections, which is small in amount and do not contribute much to the total score. The random false positive detections at close range may lead to slightly but not significantly lower spatial autocorrelation scores.

Referring to FIG. 13B, the same projected LiDAR frame with grid cells is colored by grayscale indicating the proposed metric with the intensity weight multiplier. Since the low intensity and sparse points are correlated as they both are caused by the water absorption, the intensity weight multiplier adds more weight to those grid cells with low spatial autocorrelation, and thus the gap between normal and rain data frames is enlarged.

Scenario 3: Hardware Failure

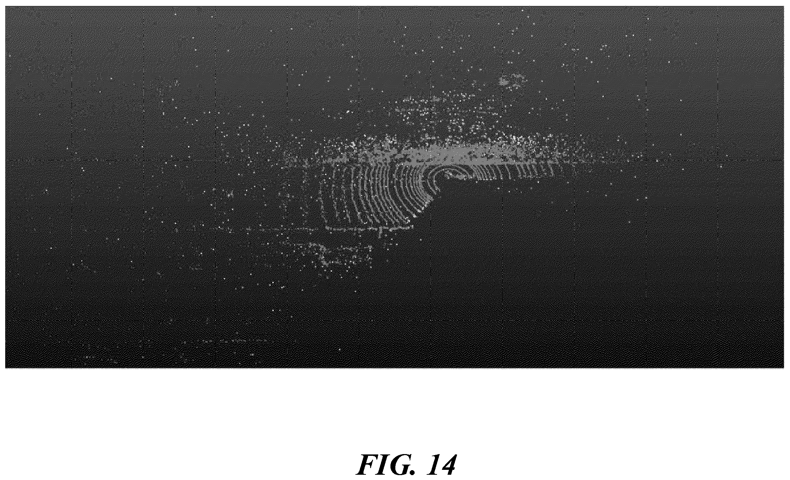

FIG. 14 shows an example of a 3min trip segment based on some embodiments of the disclosed technology.

This scenario is a 3min trip segment obtained by LiDAR 2. The LiDAR starts to generate a high amount of false positive points with abnormal intensities close to 2:00 (2 minutes into the trip segment) and recovers after about 30 sec. As shown in FIG. 14, the false positive rate is high in this case.

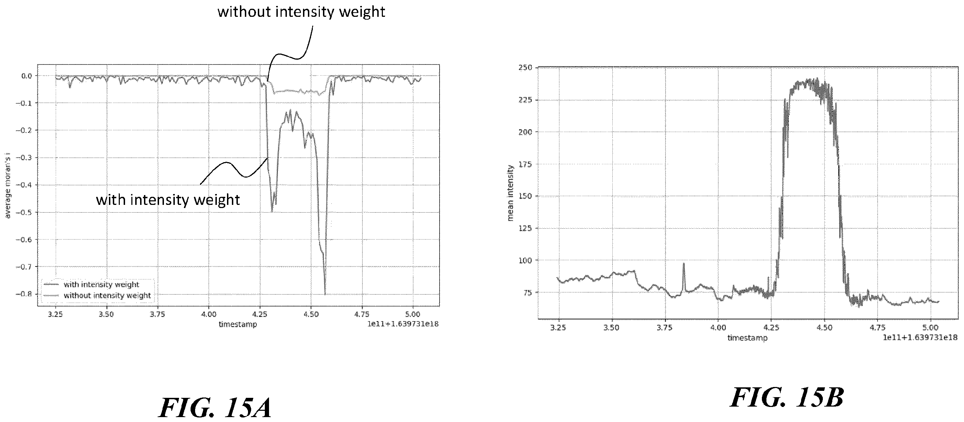

FIG. 15A shows both weighted spatial autocorrelation and unweighted spatial autocorrelation over the 3 min trip segment. FIG. 15B shows the average intensity of the LiDAR pointcloud throughout the trip segment.

Due to the sparse noise distribution pattern, both weighted spatial autocorrelation and unweighted spatial autocorrelation have significant low scores as the false positive detections start to occur. In some implementations, as the overall LiDAR intensity increases during the failure time, the intensity weight multiplier decreases, which leads to an increase in the quality metric. However, the quality metric remains low enough to distinguish the LiDAR frames from normal ones.

Scenario 4: Rain

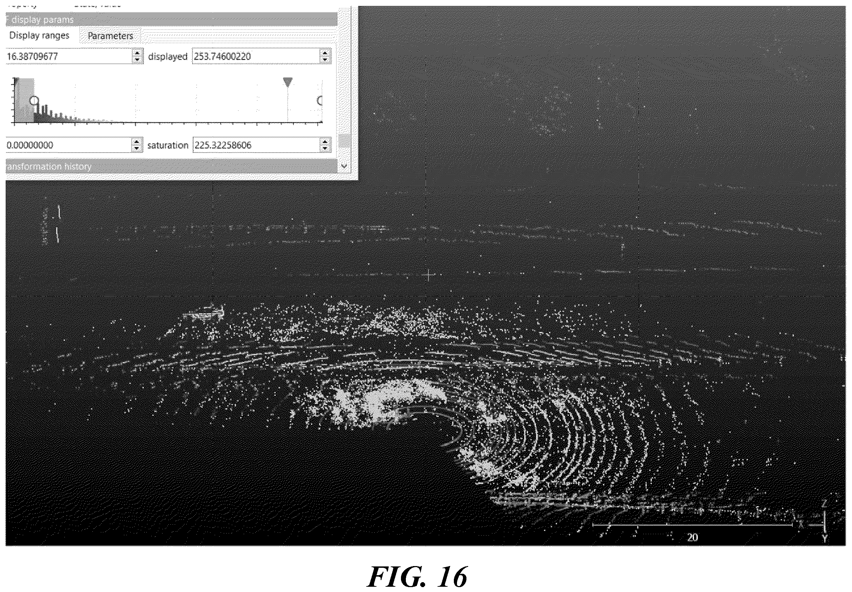

FIG. 16 shows LiDAR over the same 1hr rain trip segment as that in Scenario 2, shown in FIG. 12.

In this scenario, the performance of the LiDAR using LiDAR 2 over the same 1hr rain trip segment in Scenario 2 is investigated. Due to the 905nm laser used by the LiDAR 2, it has much higher false positive rates from water splash and rain droplets compared to the LiDAR 1 in Scenario 2.

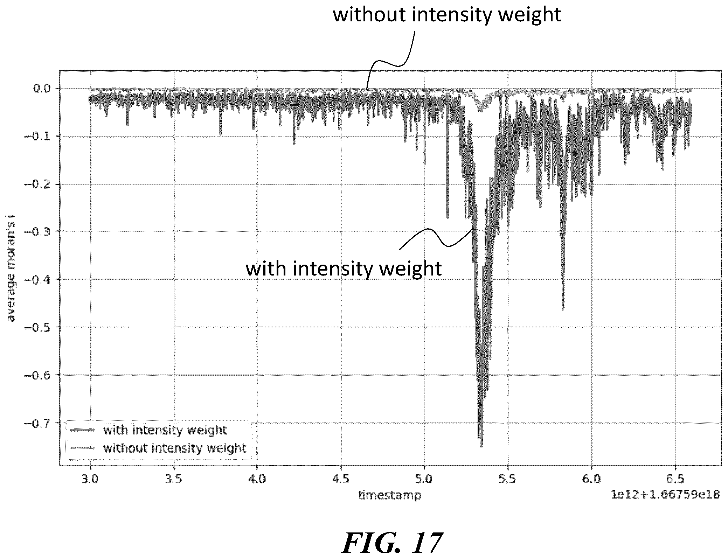

FIG. 17 shows both weighted spatial autocorrelation and unweighted spatial autocorrelation over the 1 hour trip segment.

Due to the sparse distribution pattern of the water splash and rain droplet points, both weighted spatial autocorrelation and unweighted spatial autocorrelation have significant lower scores during the rain. The quality metric score jitters during the last portion of the trip. When checking the corresponding camera data, it is found that the weather clears up during the trip and the road surface is still wet. As other vehicles occasionally pass by and produce water splash from time to time, the quality metric score captures the noise and the jitter.

Scenario 5: Fog

This scenario is an 1hr trip segment obtained using two LiDAR models (LiDAR 1 and LiDAR 2) where the fog is most dense in the first quarter of the trip and gradually clears up throughout the rest of the trip. The LiDAR performance in fog is in general very similar to the LiDAR performance in rain, except that there are no false positive detections from the water splash when other vehicles drive over wet road surfaces.

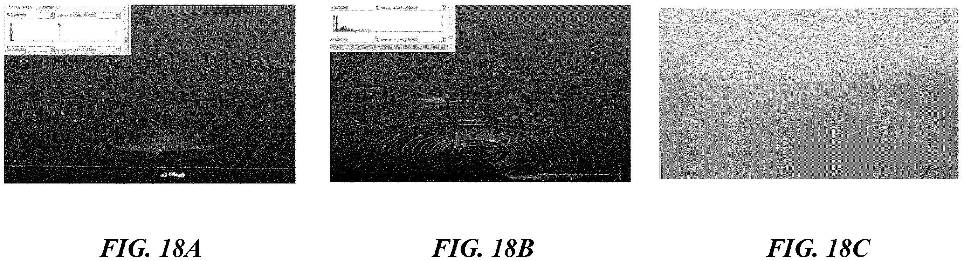

FIGS. 18A-18C show pointcloud generated by two example LiDAR models in fog and a camera image reference.

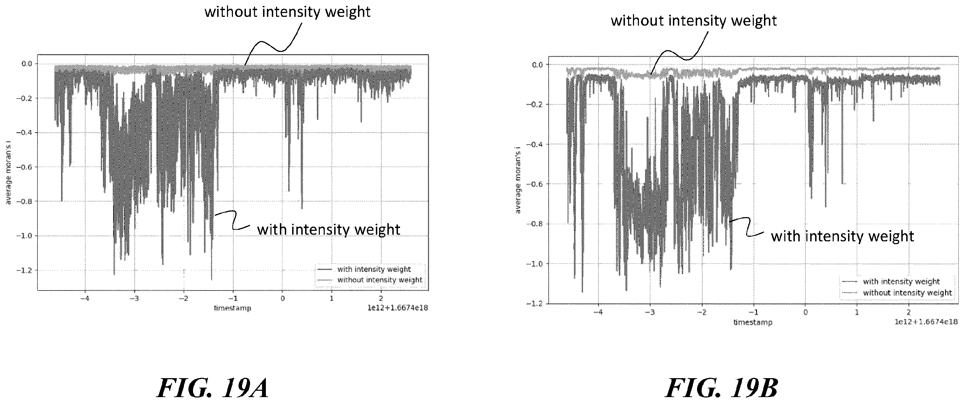

FIGS. 19A -19B show weighted spatial autocorrelation and unweighted spatial autocorrelation of two example LiDAR models over the 1 hour trip segment based on some embodiments of the disclosed technology.

Referring to FIGS. 19A -19B, the proposed quality metric shows a similar performance in fog and rain for both LiDARs. In some implementations, the unweighted spatial autocorrelation is able to detect the fog occurrence for LiDAR 2 but is not able for LiDAR 1. The overall score shows a significant difference in fog compared to clear weather for both LiDARs.

As discussed above, the disclosed technology can be implemented in some embodiments to detect LiDAR noise anomaly typically caused by rain, fog, or other factors such as hardware failure, by providing a pointcloud quality metric. The pointcloud quality metric is based on the LiDAR pointcloud ranging and intensity characteristics and does not require any data annotation or learning techniques. The metric based on some embodiments of the disclosed technology is tested on road data and proved to be effective for different 905nm and 1550nm LiDAR systems.

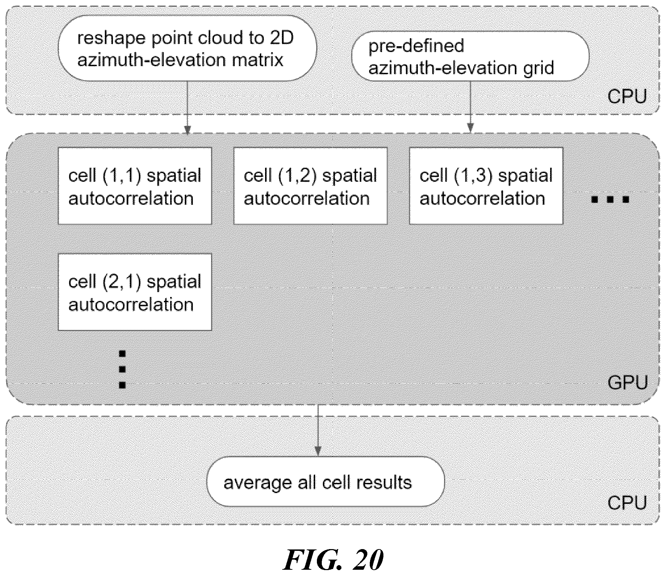

FIG. 20 shows an example LiDAR remote sensing and perception system that performs computations in parallel using a plurality of arithmetic-logic units to accelerate the spatial autocorrelation calculation based on some embodiments of the disclosed technology.

The computational cost of the spatial autocorrelation is high due to the large number of points LiDAR can produce. Since the spatial autocorrelation of each grid cell is independent to other grid cells, it can be computed in parallel. As shown in FIG. 20, in some embodiments of the disclosed technology, a processing unit that includes a plurality of arithmetic-logic units (e.g., graphics processing unit (GPU)) can be used to accelerate the spatial autocorrelation calculation. For each LiDAR data frame, the point cloud is first reorganized as a $m \times n$ matrix before sending to the GPU, where $m$ and n represent the maximum possible number of LiDAR detection in the elevation and azimuth direction, respectively. The matrix entry with index (0,0) represents the LiDAR detection at the top left corner of FOV, e.g., for LiDAR 1 with a 9.6deg VFOV configuration, the entry at (0,0) represents the point at 7deg in elevation and -60deg in azimuth. In some implementations, a LiDAR frame does not necessarily have detection at all entries, and the entries without valid detection are set to have a range of 0 which will be excluded in the spatial autocorrelation calculation. With a pre-defined grid of size $V \times H$, one may start $V \times H$ GPU threads, and each thread computes the spatial autocorrelation of the LiDAR points within the corresponding grid cell. After all threads complete the spatial autocorrelation computation, the results are sent back to the CPU for final calculation.

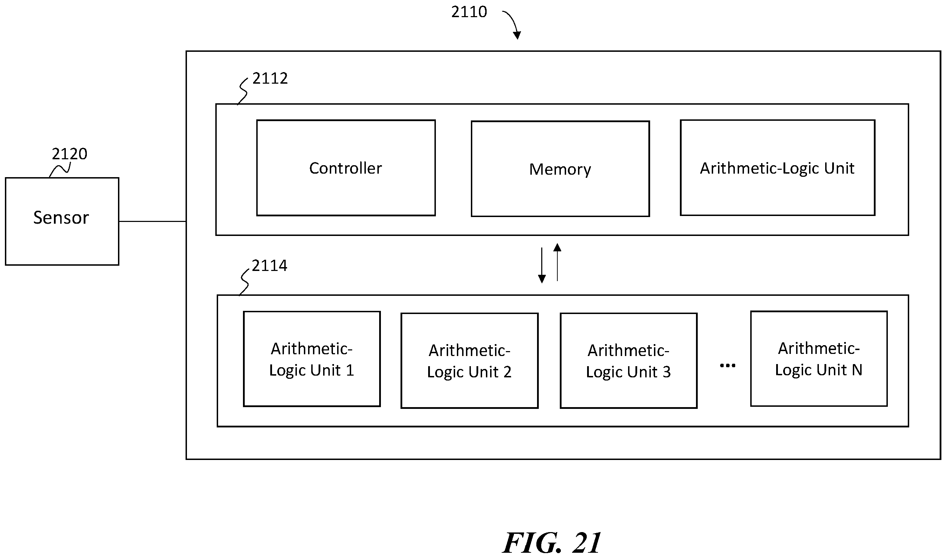

FIG. 21 shows an example of a remote sensing and perception system based on some embodiments of the disclosed technology.

In some embodiments of the disclosed technology, a remote sensing and perception system 2110 includes a first data processing unit 2112 and a second data processing unit 2114. The remote sensing and perception system 2110 is in communication with a sensor 2120 to obtain data points that are spatially distributed and respectively have intensity values. In some implementations, the sensor 2120 is configured to perform a remote detection and ranging operation.

In some embodiments of the disclosed technology, the first data processing unit 2112 includes a controller, a memory, and an arithmetic-logic unit. In one example, the controller is configured to control the flow of data between the memory and the arithmetic-logic unit, and between the first data processing unit 2112 and the sensor 2120 and between the first data processing unit 2112 and the second data processing unit 2114.

In some embodiments of the disclosed technology, the second processing unit 2114 includes a plurality of arithmetic-logic units Arithmetic-Logic Unit 1, Arithmetic-Logic Unit 2, Arithmetic-Logic Unit 3, ..., and Arithmetic-Logic Unit N (N is a positive integer) configured to perform computations in parallel.

In some embodiments of the disclosed technology, the first data processing unit 2112 may generate a remote sensing image grid that includes a plurality of grid cells obtained by performing a remote detection and ranging operation, by dividing a spatial distribution of data points into the plurality of grid cells.

In some embodiments of the disclosed technology, the first data processing unit 2112 may determine an intensity weight multiplier based on a reference intensity value of the plurality of data points and an average intensity value of the plurality of data points.

In some embodiments of the disclosed technology, each of the plurality of arithmetic-logic units in the second processing unit 2114 may determine a spatial autocorrelation of data points for each corresponding grid cell based on a difference in distances between neighboring data points in each grid cell.

In some embodiments of the disclosed technology, the first data processing unit 2112 may determine a quality score of the data points for each grid cell by applying the intensity weight multiplier to the spatial autocorrelation of the neighboring data points in each grid cell to determine whether the neighboring data points in each grid cell include one or more abnormal data points that are created by a noise source.

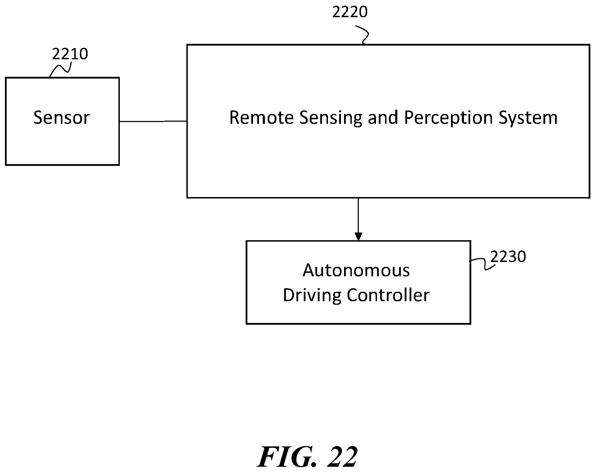

FIG. 22 shows an example of a remote sensing and perception system for controlling an autonomous vehicle based on some embodiments of the disclosed technology.

In some implementations, a remote sensing and perception system 2220 may be in communication with a sensor 2210 and may obtain data points that are spatially distributed and respectively have intensity values, by performing a remote detection and ranging operation; determine a spatial autocorrelation of the data points based on a difference in distances between neighboring data points of the data points; determine an intensity weight multiplier based on a reference intensity value of the data points and an average intensity value of the data points; and determine a quality score of the data points by applying the intensity weight multiplier to the spatial autocorrelation of the data points to determine whether the data points include one or more abnormal data points that are created by a noise source.

In some implementations, a remote sensing and perception system 2220 may be in communication with an autonomous driving controller 2230 to provide the quality score to the autonomous driving controller 2230 configured to control an autonomous vehicle by considering, based on the quality score, data points other than the one or more abnormal data points.

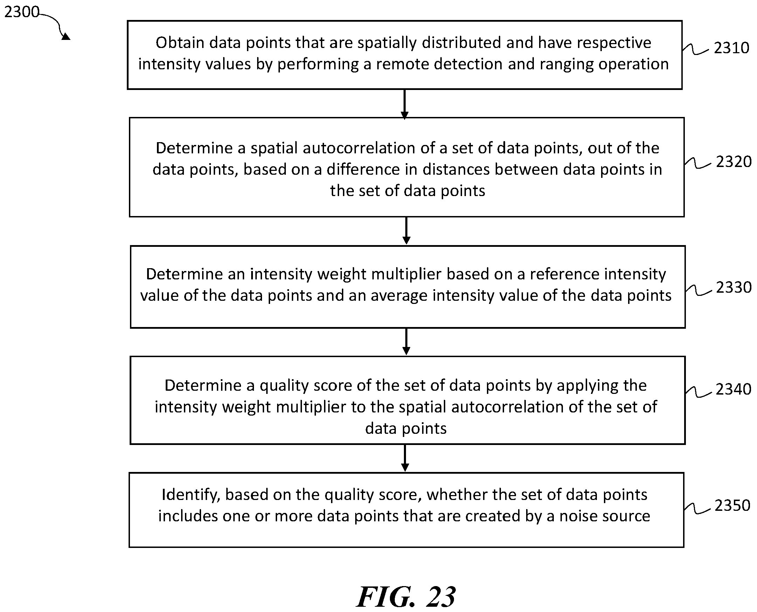

FIG. 23 shows a flowchart of an example of a remote sensing and perception method based on some embodiments of the disclosed technology.

In some embodiments of the disclosed technology, a remote sensing and perception method 2300 may include, at 2310, obtaining data points that are spatially distributed and have respective intensity values by performing a remote detection and ranging operation, at 2320, determining a spatial autocorrelation of a set of data points, out of the data points, based on a difference in distances between data points in the set of data points, at 2330, determining an intensity weight multiplier based on a reference intensity value of the data points and an average intensity value of the data points, at 2340, determining a quality score of the set of data points by applying the intensity weight multiplier to the spatial autocorrelation of the set of data points, and at 2350, identifying, based on the quality score, whether the set of data points includes one or more data points that are created by a noise source.

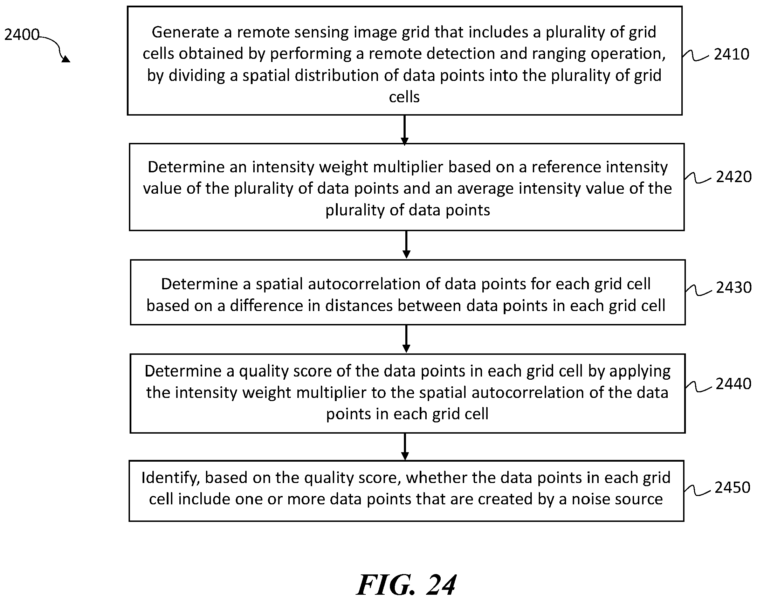

FIG. 24 shows a flowchart of an example of a remote sensing and perception method based on some embodiments of the disclosed technology.

In some embodiments of the disclosed technology, a remote sensing and perception method 2400 may include, at 2410, generating a remote sensing image grid that includes a plurality of grid cells obtained by performing a remote detection and ranging operation, by dividing a spatial distribution of data points into the plurality of grid cells, at 2420, determining an intensity weight multiplier based on a reference intensity value of the plurality of data points and an average intensity value of the plurality of data points, at 2430, determining a spatial autocorrelation of data points for each grid cell based on a difference in distances between data points in each grid cell, at 2440, determining a quality score of the data points in each grid cell by applying the intensity weight multiplier to the spatial autocorrelation of the data points in each grid cell, and at 2450, identifying, based on the quality score, whether the data points in each grid cell include one or more data points that are created by a noise source.

Therefore, various implementations of features of the disclosed technology can be made based on the above disclosure, including the examples listed below.

Example 1. A remote sensing method, comprising: obtaining data points that are spatially distributed and have respective intensity values by performing a remote detection and ranging operation; determining a spatial autocorrelation of a set of data points, out of the data points, based on a difference in distances between data points in the set of data points; determining an intensity weight multiplier based on a reference intensity value of the data points and an average intensity value of the data points; determining a quality score of the set of data points by applying the intensity weight multiplier to the spatial autocorrelation of the set of data points; and identifying, based on the quality score, whether the set of data points includes one or more data points that are created by a noise source. In some implementations, the remote detection and ranging operation may include any operations associated with LiDAR. In some implementations, the intensity value may include the reflectivity (e.g., the ability of a surface to reflect the laser pulse that LiDAR sends out) or the strength of a receiving signal of LiDAR. Accordingly, intensity values of data points can indicate the reflectivity of objects corresponding to the data points or the strength of a receiving signal of LiDAR from the objects corresponding to the data points. In some implementations, the intensity refers to the strength of signals or light rays received by a ranging sensor during its ranging operation, e.g., the number of transmitted signals or light rays (e.g., laser pulses) that are reflected by a target object. The intensity is dependent on a reflectivity of a surface of the target object, a range or distance between the sensor and the target object, and environment conditions.

Example 2. The method of example 1, wherein the reference intensity value of data points is determined based on an intensity during a normal operation of the remote detection and ranging operation.

Example 3. The method of example 1, wherein the one or more data points created by the noise source include at least one of: randomly and sparsely distributed data points; or data points with intensity values lower than an average intensity by a predetermined value.

Example 4. The method of example 1, wherein it is determined that the data points include one or more data points created by the noise source, upon a determination that the quality score of the set of data points is lower than a reference quality score.

Example 5. The method of example 4, wherein the reference quality score is statistically determined.

Example 6. The method of example 1, wherein the applying the intensity weight multiplier to the spatial autocorrelation of the data points includes multiplying the spatial autocorrelation by the intensity weight multiplier.

Example 7. The method of example 1, wherein the intensity weight multiplier is a mean intensity or a standard deviation of the data points.

Example 8. The method of example 1, further comprising: generating a remote sensing image grid by dividing a spatial distribution of the data points into a plurality of grid cells; determining the spatial autocorrelation for each grid cell; and determining the quality score for each grid cell.

Example 9. The method of example 8, wherein the generating the remote sensing image grid includes projecting the data points onto an azimuth-elevation image and dividing the azimuth-elevation image by a grid size.

Example 10. The method of example 8, wherein the determining the spatial autocorrelation for each grid cell includes calculating a weighted spatial autocorrelation of all distance values of the data points in each grid cell.

Example 11. The method of example 1, wherein the remote detection and ranging operation includes a light detection and ranging (LiDAR).

Example 12. The method of example 1, further comprising: providing the quality score to an autonomous driving controller to control an autonomous vehicle by considering, based on the quality score, data points other than the one or more data points that are created by the noise source.

Example 13. A remote sensing method, comprising: generating a remote sensing image grid that includes a plurality of grid cells obtained by performing a remote detection and ranging operation, by dividing a spatial distribution of data points into the plurality of grid cells; determining an intensity weight multiplier based on a reference intensity value of the plurality of data points and an average intensity value of the plurality of data points; determining a spatial autocorrelation of data points for each grid cell based on a difference in distances between data points in each grid cell; determining a quality score of the data points in each grid cell by applying the intensity weight multiplier to the spatial autocorrelation of the data points in each grid cell; and identifying, based on the quality score, whether the data points in each grid cell include one or more data points that are created by a noise source.

Example 14. The method of example 13, wherein the spatial distribution of data points is an azimuth-elevation image of the data points.

Example 15. The method of example 13, wherein the reference intensity value of the plurality of data points is determined based on an intensity during a normal operation of the remote detection and ranging operation.

Example 16. The method of example 13, wherein the one or more data points created by the noise source include at least one of: randomly and sparsely distributed data points; or data points with intensity values lower than an average intensity by a predetermined value.

Example 17. The method of example 13, wherein it is determined that the data points include one or more data points created by the noise source, upon a determination that a sum of quality scores of the data points in the plurality of grid cells is lower than a reference quality score.

Example 18. The method of example 13, wherein the applying the intensity weight multiplier to the spatial autocorrelation of the data points includes multiplying the spatial autocorrelation by the intensity weight multiplier.

Example 19. The method of example 13, further comprising: providing the quality score to an autonomous driving controller to control an autonomous vehicle by considering, based on the quality score, data points other than the one or more data points created by the noise source.

Example 20. A remote sensing and perception system, comprising: a first data processing unit configured to: generate a remote sensing image grid that includes a plurality of grid cells obtained by performing a remote detection and ranging operation, by dividing a spatial distribution of data points into the plurality of grid cells; determine an intensity weight multiplier based on a reference intensity value of the plurality of data points and an average intensity value of the plurality of data points; and determine a quality score of the data points in each grid cell; and a second processing unit in communication with the first data processing unit and including a plurality of arithmetic-logic units configured to perform computations in parallel, each of the plurality of arithmetic-logic units configured to determine a spatial autocorrelation of data points in each corresponding grid cell based on a difference in distances between data points in each grid cell, wherein the quality score of the data points in each grid cell is determined by: applying the intensity weight multiplier to the spatial autocorrelation of the data points in each grid cell; and identifying, based on the quality score, whether the data points in each grid cell include one or more data points that are created by a noise source.

Example 21. The system of example 20, wherein the spatial distribution of data points is an azimuth-elevation image of the data points.

Example 22. The system of example 20, wherein the reference intensity value of the plurality of data points is determined based on an intensity during a normal operation of the remote detection and ranging operation.

Example 23. The system of example 20, wherein the one or more data points created by the noise source include at least one of: randomly and sparsely distributed data points; or data points with intensity values lower than an average intensity by a predetermined value.

Example 24. The system of example 20, wherein it is determined that the data points include one or more data points that are created by the noise source, upon a determination that a sum of quality scores of the data points in the plurality of grid cells is lower than a reference quality score.

Example 25. The system of example 20, wherein the applying the intensity weight multiplier to the spatial autocorrelation of the data points includes multiplying the spatial autocorrelation by the intensity weight multiplier.

Appendix A includes additional information related to various embodiments of the disclosed technology.

Implementations of the subject matter and the functional operations described in this patent document can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, e.g., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media, and memory devices, including by way of example semiconductor memory devices, e.g., EPROM, EEPROM, and flash memory devices. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

**Claims**

1. A remote sensing method, comprising:

   obtaining data points that are spatially distributed and have respective intensity values by performing a remote detection and ranging operation;
   determining a spatial autocorrelation of a set of data points, out of the data points, based on a difference in distances between data points in the set of data points;
   determining an intensity weight multiplier based on a reference intensity value of the data points and an average intensity value of the data points;
   determining a quality score of the set of data points by applying the intensity weight multiplier to the spatial autocorrelation of the set of data points; and
   identifying, based on the quality score, whether the set of data points includes one or more data points that are created by a noise source.

2. The method of claim 1, wherein the reference intensity value of data points is determined based on an intensity during a normal operation of the remote detection and ranging operation.

3. The method of claim 1 or 2, wherein the one or more data points created by the noise source include at least one of: randomly and sparsely distributed data points; or data points with intensity values lower than an average intensity by a predetermined value.

4. The method of any preceding claim, wherein it is determined that the data points include one or more data points created by the noise source, upon a determination that the quality score of the set of data points is lower than a reference quality score, and optionally wherein the reference quality score is statistically determined.

5. The method of any preceding claim, wherein the applying the intensity weight multiplier to the spatial autocorrelation of the data points includes multiplying the spatial autocorrelation by the intensity weight multiplier,
   or/and optionally wherein the intensity weight multiplier is a mean intensity or a standard deviation of the data points.

6. The method of any preceding claim, further comprising:

   generating a remote sensing image grid by dividing a spatial distribution of the data points into a plurality of grid cells;
   determining the spatial autocorrelation for each grid cell; and
   determining the quality score for each grid cell.

7. The method of claim 6, wherein the generating the remote sensing image grid includes projecting the data points onto an azimuth-elevation image and dividing the azimuth-elevation image by a grid size, or wherein the determining the spatial autocorrelation for each grid cell includes calculating a weighted spatial autocorrelation of all distance values of the data points in each grid cell.

8. The method of any preceding claim, further comprising:
   providing the quality score to an autonomous driving controller to control an autonomous vehicle by considering, based on the quality score, data points other than the one or more data points that are created by the noise source.

9. A remote sensing method, comprising:

   generating a remote sensing image grid that includes a plurality of grid cells obtained by performing a remote detection and ranging operation, by dividing a spatial distribution of data points into the plurality of grid cells;
   determining an intensity weight multiplier based on a reference intensity value of the plurality of data points and an average intensity value of the plurality of data points;
   determining a spatial autocorrelation of data points for each grid cell based on a difference in distances between data points in each grid cell;
   determining a quality score of the data points in each grid cell by applying the intensity weight multiplier to the spatial autocorrelation of the data points in each grid cell; and

identifying, based on the quality score, whether the data points in each grid cell include one or more data points that are created by a noise source.

10. The method of claim 9, wherein the spatial distribution of data points is an azimuth-elevation image of the data points.

11. The method of claim 9 or 10, wherein the one or more data points created by the noise source include at least one of: randomly and sparsely distributed data points; or data points with intensity values lower than an average intensity by a predetermined value.

12. The method of any of claims 9 to 11, wherein it is determined that the data points include one or more data points created by the noise source, upon a determination that a sum of quality scores of the data points in the plurality of grid cells is lower than a reference quality score, or/and optionally wherein the applying the intensity weight multiplier to the spatial autocorrelation of the data points includes multiplying the spatial autocorrelation by the intensity weight multiplier.

13. The method of any of claims 9 to 12, further comprising:

providing the quality score to an autonomous driving controller to control an autonomous vehicle by considering, based on the quality score, data points other than the one or more data points created by the noise source.

14. A remote sensing and perception system comprising at least one processing unit configured to perform the method of any of claims 9 to 13.

15. The system of claim 14, further comprising:

a first data processing unit configured to perform the steps of generating a remote sensing image grid, determining an intensity weight multiplier and determining a quality score of the data points in each grid cell; and a second processing unit in communication with the first data processing unit and including a plurality of arithmetic-logic units configured to perform computations in parallel, each of the plurality of arithmetic-logic units configured to perform the step of determining a spatial autocorrelation of data points in each corresponding grid cell based on a difference in distances between data points in each grid cell.

**FIG. 1**

*FIG. 2B*

*FIG. 2D*

*FIG. 2A*

*FIG. 2C*

*FIG. 3*

**FIG. 4**

EP 4 498 121 A1

*FIG. 5*

*FIG. 6*

*FIG. 7*

*FIG. 8*

*FIG. 9*

*FIG. 10*

*FIG. 11B*

*FIG. 11A*

*FIG. 12*

*FIG. 13A*

average autocorr: -0.6676696567732914

*FIG. 13B*

*FIG. 14*

*FIG. 15B*

*FIG. 15A*

FIG. 16

*FIG. 17*

*FIG. 18C*

*FIG. 18B*

*FIG. 18A*

*FIG. 19B*

*FIG. 19A*

EP 4 498 121 A1

```
┌─────────────────────────────────────────────────────────────────┐
│  ╭──────────────────────╮        ╭──────────────────────╮        │
│  │ reshape point cloud to 2D │   │ pre-defined          │        │
│  │ azimuth-elevation matrix │    │ azimuth-elevation grid │      │
│  ╰──────────────────────╯        ╰──────────────────────╯        │
│                                                           CPU     │
└─────────────────────────────────────────────────────────────────┘
```

reshape point cloud to 2D azimuth-elevation matrix

pre-defined azimuth-elevation grid

CPU

cell (1,1) spatial autocorrelation

cell (1,2) spatial autocorrelation

cell (1,3) spatial autocorrelation

■ ■ ■

cell (2,1) spatial autocorrelation

■
■
■

GPU

average all cell results

CPU

*FIG. 20*

2110

2112

| Controller | Memory | Arithmetic-Logic Unit |

2120

Sensor

2114

| Arithmetic-Logic Unit 1 | Arithmetic-Logic Unit 2 | Arithmetic-Logic Unit 3 | ... | Arithmetic-Logic Unit N |

**FIG. 21**

EP 4 498 121 A1

**FIG. 22**

EP 4 498 121 A1

**FIG. 23**

*FIG. 24*

Europäisches
Patentamt

European
Patent Office

Office européen
des brevets

# EUROPEAN SEARCH REPORT

Application Number

EP 24 19 1311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/177889 A1 (CANADY CHRISTOPHER DAVID [US] ET AL) 8 June 2023 (2023-06-08) * paragraph [0009] - paragraph [0010]; figures 1-3 * | 1-15 | INV. G01S7/497 G01S17/931 |
| A | US 2018/120424 A1 (ESHEL RONEN [IL] ET AL) 3 May 2018 (2018-05-03) * paragraph [0322] - paragraph [0328]; figures 5-6 * | 1-15 | ADD. G01S17/42 |
| A | US 2021/221398 A1 (KOROBKIN MIKHAIL VLADIMIROVICH [RU] ET AL) 22 July 2021 (2021-07-22) * figure 6 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 5 December 2024 | Heiß, Michael |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

\.............................................................................................
& : member of the same patent family, corresponding
document

## ANNEX TO THE EUROPEAN SEARCH REPORT
## ON EUROPEAN PATENT APPLICATION NO.

EP 24 19 1311

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | Publication date |
|---|---|---|---|
| US 2023177889 A1 | 08-06-2023 | US 2021197859 A1 | 01-07-2021 |
| | | US 2023177889 A1 | 08-06-2023 |
| | | WO 2021133810 A1 | 01-07-2021 |
| US 2018120424 A1 | 03-05-2018 | CN 109997057 A | 09-07-2019 |
| | | CN 110286388 A | 27-09-2019 |
| | | CN 111796255 A | 20-10-2020 |
| | | CN 118884405 A | 01-11-2024 |
| | | EP 3516421 A2 | 31-07-2019 |
| | | EP 3859396 A1 | 04-08-2021 |
| | | EP 4191278 A1 | 07-06-2023 |
| | | EP 4194887 A1 | 14-06-2023 |
| | | EP 4194888 A1 | 14-06-2023 |
| | | EP 4194889 A1 | 14-06-2023 |
| | | JP 6697636 B2 | 20-05-2020 |
| | | JP 7106595 B2 | 26-07-2022 |
| | | JP 7241223 B2 | 16-03-2023 |
| | | JP 7281594 B2 | 25-05-2023 |
| | | JP 7336014 B2 | 30-08-2023 |
| | | JP 2019535014 A | 05-12-2019 |
| | | JP 2020126065 A | 20-08-2020 |
| | | JP 2022141781 A | 29-09-2022 |
| | | JP 2023022136 A | 14-02-2023 |
| | | JP 2023022195 A | 14-02-2023 |
| | | JP 2023052121 A | 11-04-2023 |
| | | KR 20190049871 A | 09-05-2019 |
| | | KR 20220146680 A | 01-11-2022 |
| | | KR 20220159493 A | 02-12-2022 |
| | | KR 20220163509 A | 09-12-2022 |
| | | KR 20220163517 A | 09-12-2022 |
| | | KR 20220164081 A | 12-12-2022 |
| | | KR 20230110646 A | 24-07-2023 |
| | | KR 20240051293 A | 19-04-2024 |
| | | KR 20240149452 A | 14-10-2024 |
| | | US 2018113200 A1 | 26-04-2018 |
| | | US 2018120424 A1 | 03-05-2018 |
| | | US 2018120441 A1 | 03-05-2018 |
| | | US 2018128920 A1 | 10-05-2018 |
| | | US 2018136331 A1 | 17-05-2018 |
| | | US 2018136337 A1 | 17-05-2018 |
| | | US 2018143302 A1 | 24-05-2018 |
| | | US 2018143304 A1 | 24-05-2018 |
| | | US 2018143305 A1 | 24-05-2018 |
| | | US 2018143306 A1 | 24-05-2018 |
| | | US 2018143307 A1 | 24-05-2018 |
| | | US 2018143308 A1 | 24-05-2018 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**                    EP 24 19 1311

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | | Publication date |
|---|---|---|---|---|
| | | US | 2018143322 A1 | 24-05-2018 |
| | | US | 2018143324 A1 | 24-05-2018 |
| | | US | 2019212450 A1 | 11-07-2019 |
| | | US | 2019271769 A1 | 05-09-2019 |
| | | US | 2022050203 A1 | 17-02-2022 |
| | | WO | 2018055449 A2 | 29-03-2018 |
| US 2021221398 A1 | 22-07-2021 | RU | 2764708 C1 | 19-01-2022 |
| | | US | 2021221398 A1 | 22-07-2021 |

EPO FORM P0459

For more details about this annex : see Official Journal of the European Patent Office, No. 12/82